# FASCICULE DE BREVET EUROPEEN

(11) **EP 0 607 352 B1**
(45) Date de publication et mention de la délivrance du brevet: **21.04.1999**
(21) Numéro de dépôt: 92922674.4
(22) Date de dépôt: 09.10.1992
(51) Int. Cl.: G02F 1/136

(54) **AFFICHEUR A MATRICE ACTIVE UTILISANT UN PLAN DE MASSE ENTERRE**
ANZEIGVORRICHTUNG MIT AKTIVER MATRIX UND EIGEBETTETER MASSEELEKTRODE
ACTIVE MATRIX DISPLAY DEVICE USING A BURIED GROUND PLANE

(30) Priorité: 11.10.1991 FR 9112585
(43) Date de publication de la demande: 27.07.1994
(73) Titulaire: THOMSON-LCD, 75008 Paris (FR)
(72) Inventeur: CASTLEBERRY, Donald, F-92045 Paris-La Défense Cédex 67 (FR); CHAUDET, René, F-92045 Paris-La Défense Cédex 67 (FR); VIGNOLLE, Jean-Michel, F-92045 Paris-La Défense Cédex 67 (FR)
(74) Mandataire: Ruellan-Lemonnier, Brigitte
(86) Numéro de dépôt international: FR9200943
(87) Numéro de publication internationale: WO9307529

(56) Documents cités:
- EP-A- 0 136 509
- US-A- 4 239 346
- CONFERENCE RECORD OF THE 1991 INTERNATIONAL DISPLAY RESEARCH CONFERENCE 15 Octobre 1991, SAN DIEGO, US pages 223 - 226 J.M.VIGNOLLE ET AL. 'Optimization of Very Small Pitch Active Matrix LCD for Projection'
- PATENT ABSTRACTS OF JAPAN vol. 14, no. 551 (P-1139)7 Décembre 1990 & JP,A,02 234 127 ( HITACHI ) 17 Septembre 1990
- PATENT ABSTRACTS OF JAPAN vol. 10, no. 160 (P-465)(2216) 7 Juin 1986 & JP,A,61 013 228 ( MATSUSHITA ) 21 Janvier 1986
- PATENT ABSTRACTS OF JAPAN vol. 13, no. 297 (P-895)(3645) 10 Juillet 1989 & JP,A,01 076 037 ( CASIO ) 22 Mars 1989

## Description

La présente invention a pour objet un dispositif d'atténuation des capacités parasites présentes dans un écran à cristal liquide et à matrice active.

Un écran à cristal liquide est constitué d'un certain nombre de cellules à cristal liquide disposées selon un réseau matriciel. Ces cellules sont formées à partir de deux plaques support, en général en verre, collées l'une à l'autre par un joint périphérique qui ménage une cavité de faible épaisseur (de l'ordre de 10 microns) dans laquelle se trouve le cristal liquide des cellules. La première plaque support est constituée d'un substrat contenant un premier jeu d'électrodes et dans le cas des afficheurs à matrice active, les composants de commande en couches minces disposés entre ces électrodes auxquelles ils sont connectés. La seconde plaque support constitue une contre-électrode.

Chaque cellule ainsi formée fonctionne en valve optique. La modification locale de la transmission ou de la réflexion de la lumière est obtenue en appliquant de l'extérieur une tension entre un contact d'accès de la plaque et un contact de la contre-plaque. Cette tension fait naître un champ électrique entre les électrodes en regard et active le volume de cristal liquide situé entre les deux électrodes qui modifie plus ou moins les caractéristiques de la lumière qui le traverse.

Dans la suite du texte, nous appelons pixel (pour Picture Element en langue anglaise) la cellule formant le point élémentaire d'image ou d'affichage constitué par l'électrode, le cristal liquide, la contre-électrode, le composant de commande et les connexions du composant avec l'électronique périphérique.

La surface active du pixel est la surface couverte par l'électrode et le cristal liquide sur laquelle les effets électro-optiques désirés sont obtenus ; cette surface peut être supérieure ou inférieure à la surface effective de l'électrode car les effets de bord autour de l'électrode peuvent soit augmenter, soit diminuer la surface de la zone active (ces variations étant de l'ordre de 1 µm en deça ou au-delà de la zone couverte par l'électrode).

La surface non commandée du pixel est constituée par toute la surface du pixel hors la surface active définie précédemment.

L'utilisation comme composants de commande de transistors permet un adressage des pixels ligne par ligne ou multiplexage. Le transistor sert d'interrupteur entre le pixel et la colonne qui apporte l'information d'image (data line) et qui correspond au drain des transistors. Cet interrupteur, commandé par la ligne (scan line) correspondant aux grilles des transistors est tout d'abord fermé pendant la durée d'un balayage ligne de l'image, afin de mettre en contact électrique le pixel et la colonne correspondante. Puis cet interrupteur est ouvert dès que la ligne suivante doit être adressée afin d'isoler le pixel de la colonne correspondante, ceci pour que le pixel mémorise fidèlement la tension qui lui a été appliquée. Cette mémorisation fidèle n'est cependant pas parfaite: en effet, le pixel est électriquement couplé aux lignes et colonnes voisines par l'intermédiaire de capacités planaires parasites. Cela signifie que les variations de tension sur les lignes et les colonnes voisines génèrent des variations de la tension du pixel. Dans le cas des écrans à haute définition (au moins 100 lignes par centimètre); ces effets deviennent très perturbateurs et génèrent des artefacts visibles : papillotement de l'image (flicker), bavures verticales (vertical crosstalk), qui nuisent à la qualité de rimage. Ces perturbations sont bien connues et un moyen d'y remédier est d'ajouter une capacité de stockage.

Pour réaliser cette capacité de stockage, il existe de nombreuses solutions décrites dans la littérature scientifique.

Une solution simple consiste à agrandir l'électrode pixel de façon à ce qu'elle recouvre la ligne adjacente. La capacité obtenue est cependant trop faible pour être efficace et complique l'électronique de commande.

Une autre solution consiste à rajouter une ligne supplémentaire entre chaque paire de scan line, cette ligne passant en regard de l'électrode pixel et servant donc uniquement de capacité de stockage. Cette structure est très utilisée car elle permet d'obtenir une valeur de la capacité de stockage satisfaisante et ne nécessite pas de modification dans le procédé de fabrication. mais cette structure présente l'inconvénient de diminuer le coefficient d'ouverture de l'écran (OAR = Open Aperture Ratio), la ligne supplémentaire étant réalisée avec un métal opaque. Pour améliorer l'OAR, on peut réaliser la ligne avec un matériau conducteur transparent, mais les matériaux actuellement disponibles sont trop résistifs (ITO) et leur usage entraîne des artefacts supplémentaires (couplage horizontal) qui dégradent la qualité de l'image. Une troisième solution consiste à rajouter non pas des lignes supplémentaires, mais des colonnes supplémentaires. Ce type de capacité de stockage est décrit dans la demande de brevet EP 136 509 de THOSHIBA. Cette solution permet d'obtenir une valeur de capacité de stockage satisfaisante, mais diminue également l'OAR. Dans le cas de mode d'affichage réflexif, le brevet US 4 239 346 décrit une capacité de stockage protégeant de la lumière le transistor FET. Ce type de capacité de stockage nécessite un niveau de masquage.

La présente invention a pour objet de réaliser une capacité de stockage très supérieure aux capacités précédemment décrites, ceci sans diminuer l'OAR, tout en diminuant les capacités planaires parasites. Elle est caractérisée par l'utilisation d'un plan de masse constitué par deux couches superposées l'une sur l'autre, une des couches étant conductrice et transparente et l'autre couche étant opaque, au moins la couche opaque étant munie d'ouvertures.

Ce plan de masse est déposé sur la plaque substrat. La couche conductrice et transparente forme, avec une couche d'isolant, une capacité de stockage sur laquelle sont déposés et gravés les composants de commande et les lignes et colonnes de connexion en couches minces. Ce plan de masse, d'une part, fait écran aux lignes de champs de la capacité planaire parasite qui diminue fortement et, d'autre part, forme une capacité de stockage qui, étant en parallèle avec la capacité du cristal liquide, augmente la capacité du pixel et ainsi diminue le coefficient de couplage. Cette capacité de stockage diminue donc la variation de la charge du pixel théoriquement isolé électriquement lors de variations des tensions des colonnes ou lignes adjacentes aux électrodes des pixels et rend l'électronique de correction de ce défaut beaucoup plus simple. D'autre part, la couche opaque joue le rôle de light shield et sa surface peut être diminuée au maximum.

La présente invention est, d'autre par, de réalisation très simple puisqu'il suffit d'ajouter deux étapes relativement faciles d'exécution en début de procédé de fabrication de l'écran à cristal liquide.

L'invention sera mieux comprise et d'autres avantages apparaîtront à la lecture de la description qui va suivre, donnée à titre non limitatif, et accompagnée des figures annexées parmi lesquelles :
- la figure 1 représente une vue en coupe d'un pixel selon l'art connu,
- la figure 2 représente son schéma électrique capacitif équivalent,
- la figure 3 représente une vue en coupe d'un pixel selon un mode de réalisation,
- la figure 4 représente son schéma électrique capacitif équivalent,
- la figure 5 représente une vue en coupe d'un pixel selon un premier mode de réalisation de l'invention,
- la figure 6 représente une vue en coupe d'un pixel selon un second mode de réalisation de l'invention,
- la figure 7 représente une vue en coupe d'un pixel selon un autre mode de réalisation de l'invention,
- la figure 8 représente une vue de dessus d'un écran à cristal liquide selon un cas particulier de réalisation du second mode de réalisation.

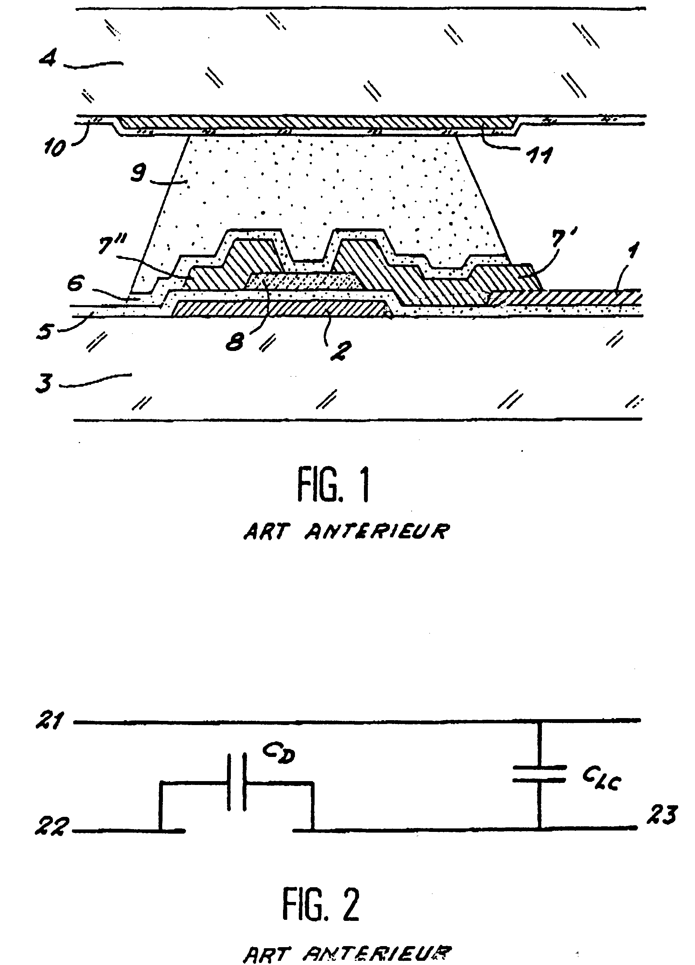

Le pixel, selon l'art connu, représenté sur la figure 1 est constitué d'une plaque substrat 3 et d'une contre-plaque 4 qui peuvent être en verre ou en tout autre matériau, cela dépendra de l'afficheur qui peut avoir trois modes de fonctionnement: transmissif, réflexif ou transflexif.

Sur la plaque 3 est déposée et gravée la grille 2 du transistor de commande du pixel, qui correspond à une ligne d'adressage. Au-dessus de celle-ci est déposée une couche d'isolant 5 et le matériau semi-conducteur 8. La couche 1 réalise l'électrode du pixel considéré et est connectée à la source 7' du transistor de commande du pixel. La couche 7" constitue le drain du transistor et correspond à une colonne transmettant les données images. Une couche de passivation 6 est déposée sur la source 7', le matériau semi-conducteur 8 et le drain 7". La couche 9 est déposée et gravée de manière à recouvrir le tout pour isoler les éléments du transistor photosensible et jouer son rôle d'espaceur entre les plaques 3 et la contre-plaque 4 afin que le cristal liquide soit contenu entre ces deux plaques dans un volume dont la hauteur doit être parfaitement ajustée. Sur cette contre-électrode a été déposée, de manière facultative, une couche 11 de matériau opaque (ou black matrix) afin de protéger le composant et d'améliorer le contraste de l'écran en masquant les parties non commandées de celui-ci, et par dessus elle, la contre-électrode transparente 10.

Les matériaux utilisés pour la grille 2, l'électrode 1, la source 7' et le drain 7" du transistor, et la contre-électrode 10 sont des matériaux conducteurs qui peuvent être de types divers. On utilise de préférence du titane, du chrome, du molybdène, de l'aluminium, ou du tungstène pour la grille 2, la source 7' et le drain 7". On peut dans certains cas aussi utiliser un conducteur transparent tel l'oxyde d'indium et d'étain (ITO) ou de l'oxyde d'étain (Sₙ O₂). La contre électrode 10 et l'électrode 1 du pixel peuvent être constituées d'un conducteur transparent (ITO ou Sₙ O₂) ou opaque, ou réfléchissant salon le mode de fonctionnement de l'afficheur (transmissif, réflexif, ou transflexif). Les couches d'isolant 5 et 6 sont réalisées de préférence en oxyde de silicium (Si O₂) ou en nitrure de silicium (Si N) et la couche 9 est, de préférence, réalisée en un matériau polyimide souvent appelé LBL (light blocking layer).

Les différentes couches ont une épaisseur de l'ordre de 200 à 3.000A pour la couche 2,500 à 3,000 A pour la couche 5, 300 à 3,000 A pour la couche 1, 500 à 3,000 A pour la couche 8, 500 à 5,000 A pour les couches 7' et 7", 300 à 500 A pour la couche 6, 3 à 6 microns pour la couche 9, 500 à 3.000 A pour la couche 11 et 300 à 3.000 A pour la couche 10.

Le composant de commande considéré ici est un transistor en couches minces (TFT) en silicium amorphe, monocristallin ou polycristallin, mais il peut aussi être une diode ou un élément métal isolant métal.

Les pixels sont commandés pour modifier la polarisation de la lumière tel que le mode nématique en hélice, la bi-réfringence contrôlée électriquement (BCF) ou le mode ferroélectrique, ou pour modifier la diffusion ou l'absorption de la lumière.

Il existe une capacité parasite entre la grille 2 et l'électrode 1 en regard l'une de l'autre ; cette capacité planaire parasite a, pour les écrans à haute définition (au moins 100 lignes par centimètres), un effet important qui perturbe la tension appliquée sur le pixel de plusieurs volts, ce qui se traduit par un papillottement de l'image (flicker) lorsque le LCD est adressé de manière conventionnelle. Cette capacité parasite est aussi à l'origine de phénomènes de marquage sur l'écran. Il existe également une capacité planaire parasite entre le drain 7" et l'électrode 1 du pixel. Cette capacité parasite perturbe la tension appliquée sur le pixel et se traduit par un phénomène de bavures verticales (vertical crosstalk).

Le schéma électrique capacitif équivalent est représenté sur la figure 2 dans laquelle C_{Ic} est la capacité du cristal liquide contenu entre les électrodes 1 et 10 et C_{d} la capacité parasite planaire entre la grille 2 et l'électrode 1. La ligne 21 correspond à la contre-électrode 10, la ligne 22 à la grille et la ligne 23 à l'électrode 1. Si on nomme α le coefficient de couplage,

α = C_{d}/C_{lc}

soit, à titre d'exemple :

α = 16 % pour C_{d} = 2,4ff et C_{lc} = 15ff (ff: fento Farad)

Dans les figures suivantes, les composants de commande considérés sont identiques à celui-ci, aussi la description précédente est-elle valable pour les figures suivantes et les éléments communs ont gardé la même indexation.

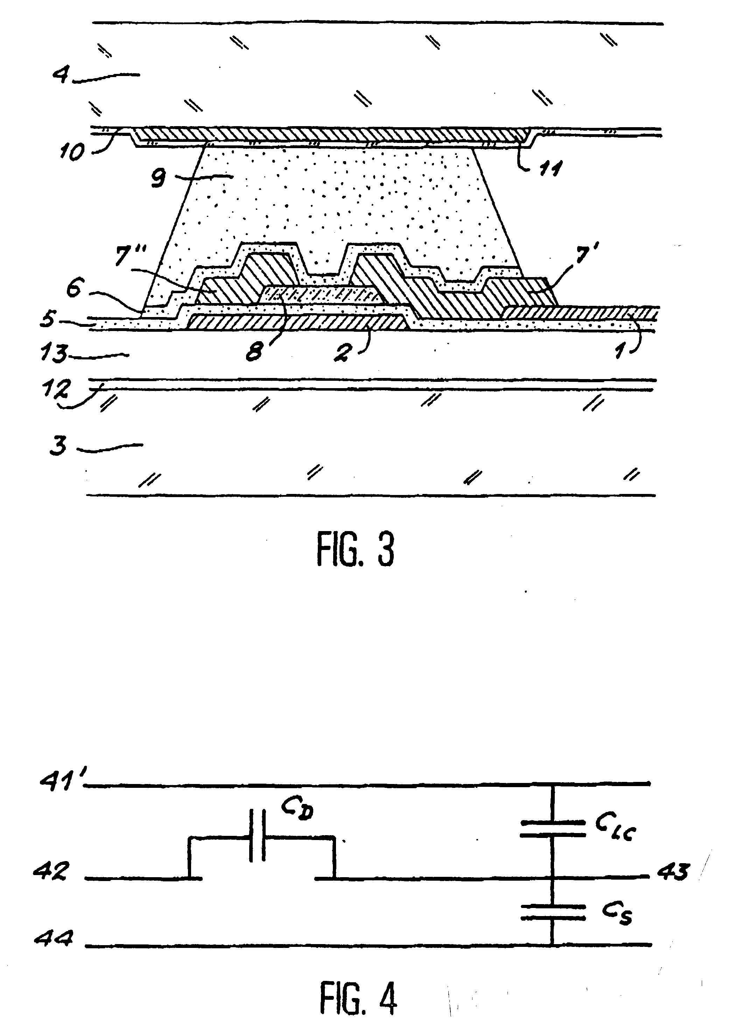

La figure 3 représente une vue en coupe d'un écran selon un mode de réalisation. A la structure décrite précédemment, on a ajouté entre les couches minces et la plaque 3 une couche conductrice 12 déposée directement sur la plaque 3 réalisant le plan de masse. Sur cette couche 12, une couche 13 d'isolant a été déposée afin d'isoler le plan de masse 12 et réalise le diélectrique de la capacité de stockage Cₛ connectée en parallèle à la capacité du cristal liquide C_{Ic} par leur électrode commune 1. La capacité du pixel a ainsi été augmentée. Par ailleurs, le plan de masse écrante les lignes de champ entre la grille 2 et l'électrode 1, et aussi entre le drain 7" et l'électrode 1. Les deux capacités parasites sont donc fortement diminuées.

Le schéma électrique capacitif équivalent est représenté sur la figure 4 dans laquelle C_{d} est la capacité parasite, C_{Ic} la capacité du cristal liquide et Cₛ la capacité de stockage dont les électrodes sont au potentiel des lignes 44 et 43 correspondant respectivement au plan de masse 12 et à l'électrode 1 du pixel. Pour reprendre l'exemple cité plus haut, pour une capacité de stockage Cₛ = 58ff, C_{d} est alors égal à 0,22ff et le coefficient de couplage est égal à 0,3 %, soit un coefficient de couplage 50 fois plus petit que celui qui existe dans le cas où il n'y a pas de plan de masse 12.

Le plan de masse 12 peut être constitué d'un matériau conducteur opaque type titane, chrome, molybdène, aluminium ou tungstène, ou d'un matériau conducteur transparent type ITO ou Sₙ O₂. Son épaisseur est de l'ordre de 400 à 3.000 A. La couche isolante quant à elle peut être réalisée en Sᵢ O₂ ou en SᵢN et son épaisseur (de l'ordre du micron) est choisie pour obtenir la capacité de stockage désirée.

Dans le cas présenté sur la figure 3, le plan de masse 12 est déposé sur la surface tota!e de l'écran, mais il peut, dans un mode de réalisation différent, ne recouvrir que les parties non commandées de l'écran ou encore il peut avoir n'importe quelle forme matricielle comme être percé de fenêtres de tous types de formes, du moment que toutes ses portions puissent être connectées à une source de tension.

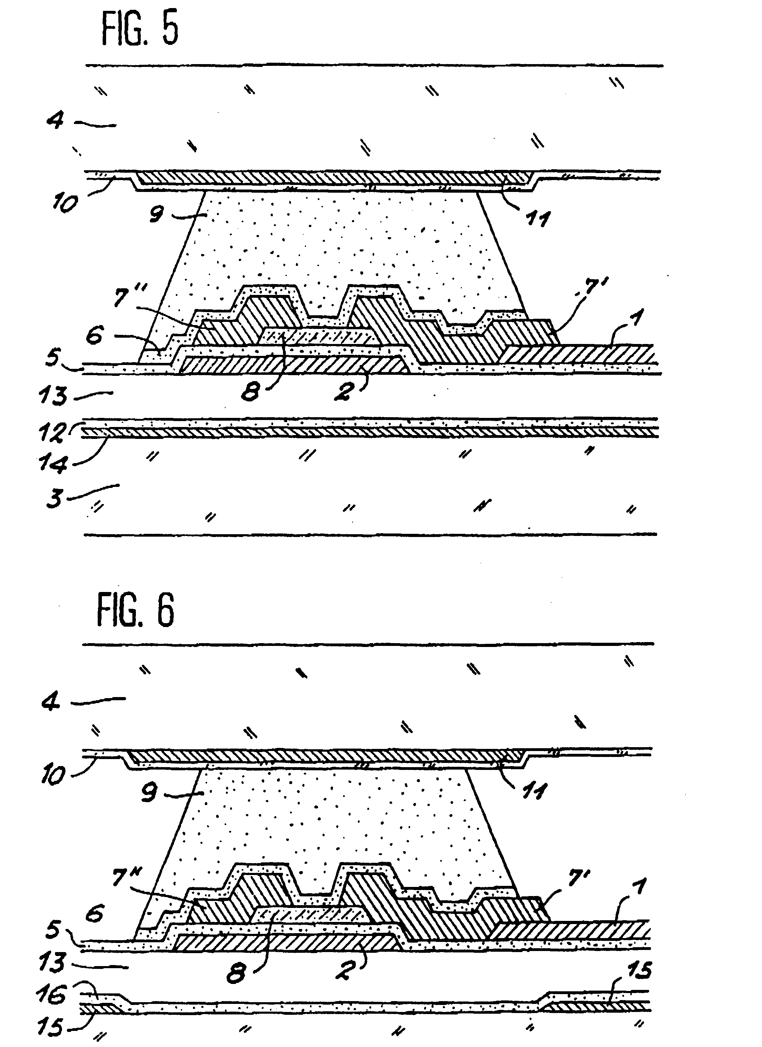

Une amélioration peut être apportée au contraste de l'écran par l'utilisation d'un masque opaque appelé Black Matrix constitué par une couche supplémentaire déposée sur la plaque substrat sur laquelle sont déposés les composants de commande et les lignes de connexion en couches minces. La figure 5 représente ainsi une vue en coupe d'un écran tel que décrit à partir des figures 3 et 4 , mais comportant un masque 14 opaque déposé directement sur la plaque 3 et sur lequel est déposé le plan de masse 12 de l'électrode de stockage Cₛ. Ce masque peut avoir différentes formes, la seule condition étant qu'il recouvre les parties non commandées de l'écran. Il peut ainsi, comme sur la figure 5, avoir la forme d'un grillage ne laissant apparaître au travers de ses fenêtres disposées de façon matricielle que la surface active des pixels. La couche 11 dans ce cas là est une matrice de zones distinctes rondes, carrées, octogonales, hexagonales ou de toute autre forme, recouvrant seulement les composants de commande et est facultative.

Ce masque peut aussi, comme sur la figure 6, être formé de segments distincts 15 horizontaux et verticaux de forme approximativement rectangulaire, déposés directement sur la plaque-substrat 3 et tels qu'ils recouvrent les parties non-commandées situées entre les composants de commande; ceux-ci étant recouverts par les zones 11 telles que décrites dans le paragraphe précédent. Le plan de masse 16 en matériau conducteur transparent est déposé et gravé sur toute la surface de l'écran par dessus ces segments opaques 15.

Dans les cas des figures 5 et 6, les couches 14 et 15 réalisant le masque opaque peuvent être constitués d'un matériau opaque isolant ou conducteur. En utilisant un matériau opaque isolant, on peut déposer les couches 14 et 15 respectivement entre les couches 2 et 13 et 5 et 16.

Dans les figures 5 et 6, les positions respectives des couches 12 et 14 et 16 et 15 constituant respectivement les plans de masse transparentes et les masques opaques peuvent être intervertis sans sortir du cadre de l'invention.

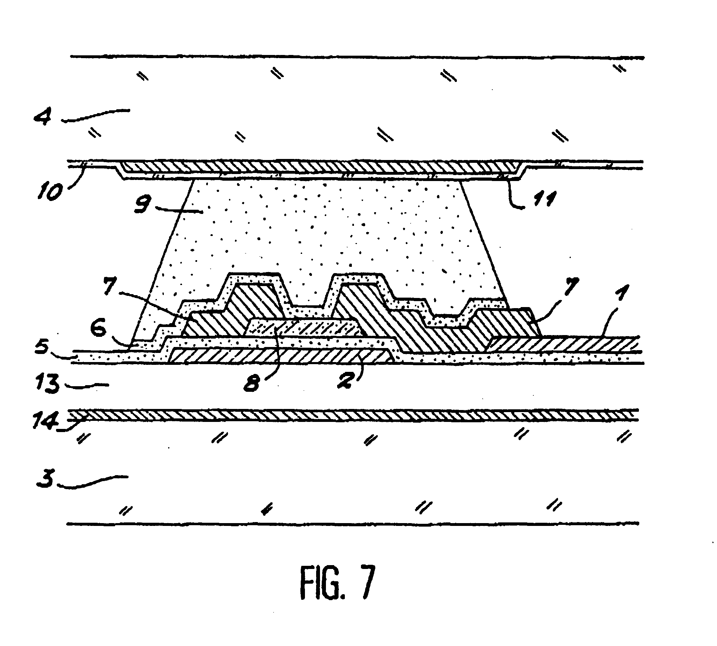

Un avantage important de l'utilisation d'un masque opaque en matériau conducteur est que l'on peut alors l'utiliser comme plan de masse, cela permet d'éliminer une étape dans le procédé de fabrication. Ainsi, la figure 7 présente ce masque opaque 14 utilisé comme plan de masse. Celuici ne peut alors avoir que la forme d'un grillage telle que décrite à partir de la figure 5 puisqu'il doit former une équipotentielle. Il est constitué d'une couche opaque 14 percée de fenêtres laissant apparaître les surfaces actives des pixels, mais recouvrant les surfaces non-commandées. Il écrante ainsi les lignes de champs de la capacité parasite planaire diminuant sa valeur tout en ajoutant une faible capacité de stockage.

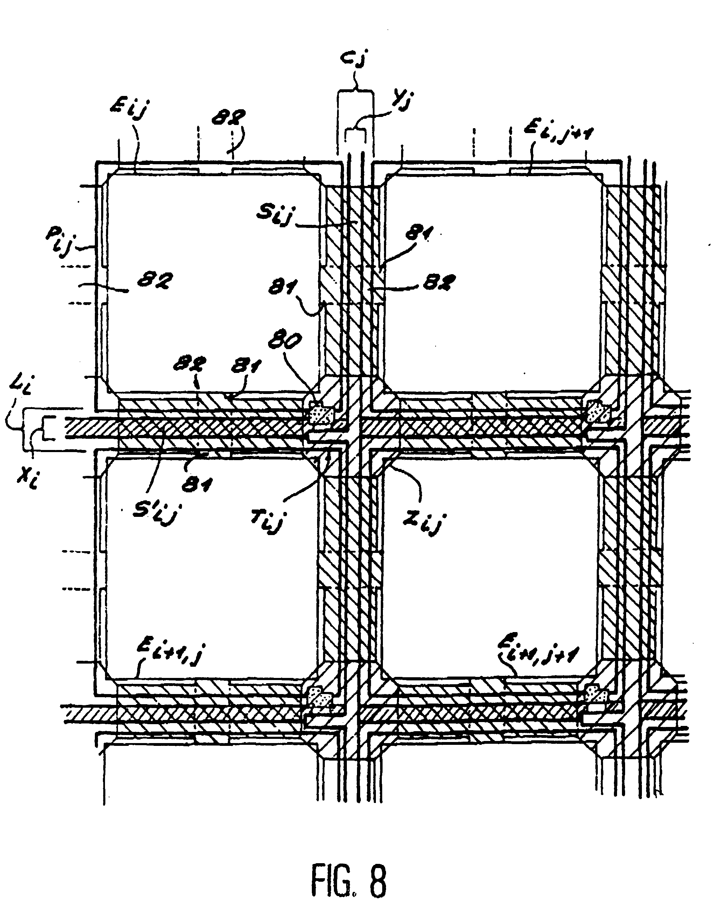

La figure 8 représente une paire du réseau matriciel comportant les électrodes, les composants les commandant et les connexions, ainsi qu'un plan de masse selon un cas particulier d'un mode de réalisation de l'invention tel que décrit plus haut à partir de la figure 6.

Pour ne pas alourdir la description, nous ne considérons qu'un seul pixel indexé ij, étant bien entendu que la même description s'applique à tous les autres pixels.

Un pixel est constitué d'une électrode Pij qui est séparée des électrodes voisine par des surfaces non commandées Li et Cj portant la ligne Xi (correspondant à la couche 2) et la colonne Yj (correspondant à la couche 7") de connexion du composant de commande Tij situé à l'intersection de ces surfaces non commandées Li et Cj. Ce composant Tij commande l'électrode Pij correspondant à la couche 1 du pixel par l'intermédiaire d'un organe de connexion 80 (correspondant à la couche 7').

Le composant considéré ici est un transistor en couche mince (TFT) mais peut être du type à deux terminaisons comme des diodes ou des éléments métal-isolant-métal sans sortir du cadre de l'invention. Le plan de masse considéré ici est une superposition de deux couches en contact : un plan de masse en matériau transparent augmentant la capacité du pixel et un masque opaque conducteur écrantant les lignes de champs des capacités parasites planaires. Le masque opaque est déposé directement sur la plaque substrat et est constitué de segments distincts verticaux Sij et horizontaux S'ij ayant une forme rectangulaire et qui sont munis de deux pattes latérales 81 débordant légèrement sur la surface active du pixel. Ces segments Sij et S'ij recouvrent les surfaces non commandées Li et Ci de l'écran situées entre les composants de commande. Ces segments peuvent aussi être reliés entre eux en recouvrant les composants de commande et formant ainsi un grillage tel que décrit à partir de la figure 5. Des zones opaques Zij correspondant aux couches 11 des figures précédentes de forme ronde, carrée, octogonale, hexagonale ou toute autre, sont déposées sur la contre-plaque et recouvrent les composants de commande Tij. Le plan de masse transparent est déposé directement sur le masque opaque et comporte un arrangement matriciel d'électrodes Eij reliées entre elles et recouvrant une grande partie de la surface active de chacun des pixels. Chacune des électrodes est munie de quatre pattes 82, en pointillés sur la figure 8, connectées aux quatre électrodes Ei+1,j, Eij-1, Ei-i,j, Eij+1 en regard de ses quatres arêtes. Ces pattes 82 recouvrent les pattes latérales 81 des segments Sij et S'ij du masque opaque.

Les positions respectives des deux couches constituant le plan de masse et le masque opaque peuvent être interverties sans sortir du cadre de l'invention. Cependant, un avantage supplémentaire de cette structure apparaît lorsque le masque opaque conducteur est déposé au-dessous du plan de masse conducteur et transparent, c'est à dire lorsqu'il est déposé directement sur la plaque substrat. En effet, un conducteur transparent n'est pas découpable au laser mais le matériau opaque utilisé pour le masque, lui, est découpable et, en s'évaporant, va emmener le conducteur transparent avec lui et ainsi pratiquer une découpe dans le plan de masse. Ces découpes au laser sont utilisées pour corriger des défauts dans les couches minces de l'écran. Par exemple, l'isolant n'étant pas forcément fiable, il se peut que le plan de masse conducteur et transparent entre en contact avec une colonne ou une ligne et il faut alors isoler cette partie défectueuse du reste de l'écran. On perd sur la qualité d'un pixel, mais on sauve une colonne ou une ligne.

Le plan de masse est constitué d'un matériau conducteur transparent comme par exemple l'ITO ou le Sₙ O₂ et a une épaisseur de l'ordre de 400 à 3.000 A. Le masque opaque est constitué d'un matériau conducteur opaque comme, par exemple, du titane, du chrome, du molybdène, de l'aluminium ou du tungstène et a une épaisseur de l'ordre de 500 à 3,000 A.

Dans tous les exemples prédédents, la surface du plan de masse déborde suffisamment de celle de l'écran afin de pouvoir y disposer un cadre constitué d'une ou de plusieurs couches d'un ou de plusieurs matériaux ayant une résistants par carrée plus faible que colle du matériau utilisé pour le plan de masse, ceci afin de diminuer le temps de réponse de la capacité de stockage, c'est à dire le temps qu'il faudra pour que la plan de masse redevienne une équipotentielle après une variation locale de la charge.

Dans le cas d'un plan de masse d'ITO, la cadre peut être en titane et peut avoir une largeur de l'ordre de 50 à 200µm et une épaisseur de l'ordre de 500 à 2000A.

La présente invention peut être utilisée dans tous les afficheurs à cristaux liquides et, en particulier, dans les écrans à cristal liquide à haute définition.

## Revendications

1. Ecran de visualisation à matrice active comportant une plaque-substrat (3) sur une face de laquelle sont déposés des électrodes (1) et des composants en couches minces commandant ces électrodes (1), et une contre-plaque (4) comportant une ou des contre-électrodes (10) et couvrant ladite face de la plaque-substrat (3), un cristal liquide étant compris entre les électrodes (1) de la plaque (3) et la ou les contre-électrodes (10) de la contre-plaque (4), l'écran comportant un plan de masse formant une équipotentielle sur toute la surface de l'écran entre la plaque-substrat (3) et les couches minces des composants de commande, caractérisé en ce que le plan de masse est constitué par deux couches superposées l'une sur l'autre, une des couches étant conductrice et transparente et l'autre couche étant opaque, au moins la couche opaque étant munie d'ouvertures.

2. Ecran de visualisation à matrice active selon la revendication 1, caractérisé en ce que la couche opaque (14, 16) est conductrice ou non, la couche transparente (12, 16) étant déposée sur la couche opaque (14, 15), elle-même déposée sur la plaque (3) ou inversement.

3. Ecran de visualisation à matrice active selon la revendication 2, caractérisé en ce que la couche opaque (14, 15) recouvre entièrement les surfaces non commandées de l'écran.

4. Ecran de visualisation à matrice active selon la revendication 2, caractérisé en ce que la couche opaque recouvre au moins certaines parties des surfaces non commandées de l'écran.

5. Ecran de visualisation à matrice active selon la revendication 2, caractérisé en ce que la couche opaque est constituée de segments ne recouvrant entièrement que les surfaces non commandées situées entre les composants de commande.

6. Ecran de visualisation à matrice active selon la revendication 5, caractérisé en ce que la couche transparente (16) du plan de masse est constituée par un arrangement matriciel d'électrodes (Eij), chacune d'elles recouvrant entièrement ou en partie la surface active de chacun des pixels et étant munie de quatre pattes (82) connectées aux quatres électrodes en regard de ses quatre arêtes.

7. Ecran de visualisation à matrice active selon la revendication 6, caractérisé en ce que les segments (Sij, S'ij) du masque opaque sont munis de deux pattes (81) latérales débordant légèrement sur la surface active du pixel et recouvrant les pattes (82) des électrodes (Eij) de la couche transparente du plan de masse.

8. Ecran de visualisation à matrice active selon l'une quelconque des revendications 1 à 7, caractérisé en ce qu'il comporte des zones (11) qui sont en matériau opaque, de forme ronde, hexagonale, octogonale ou toute autre et sont déposées sur la contre-plaque (4) de manière à ce que leurs surfaces masquent totalement les composants de commande, parties de la surface non-commandée de l'écran, afin d'améliorer le contraste de celui-ci.

9. Ecran de visualisation à matrice active selon l'une quelconque des revendications 1 à 8, caractérisé en ce que le plan de masse constituant l'électrode de la capacité de stockage est entouré sur ses rebords par un anneau en un matériau possédant une résistance par carré plus faible que celle du plan de masse.

10. Ecran de visualisation à matrice active selon la revendication 9, caractérisé en ce que l'anneau est constitué d'un empilement de matériaux différents possédant une résistance par carré plus faible que celle du plan de masse.

## Patentansprüche

1. Bildschirm mit einer aktiven Matrix mit einer Trägerplatte (3), auf deren Oberseite Elektroden (1) und die Elektroden (1) steuernde Dünnschicht-Komponenten aufgebracht sind, und mit einer Gegenplatte (4), die eine oder mehrere Gegenelektroden (10) enthält und die Oberseite der Trägerplatte (3) bedeckt, wobei ein Flüssigkristall zwischen den Elektroden (1) der Platte (3) und der oder den Gegenelektroden (10) der Gegenplatte (4) enthalten ist und der Bildschirm eine Masseelektrode enthält, die eine Äquipotentialfläche auf der gesamten Fläche des Bildschirms zwischen der Trägerplatte (3) und den Dünnschichten der Steuerkomponenten bildet,
dadurch gekennzeichnet, daß die Masseelektrode durch zwei übereinander liegende Schichten gebildet ist und eine dieser Schichten leitend und transparent und die andere Schicht opak ist und wenigstens die opake Schicht mit Öffnungen versehen ist.

2. Bildschirm mit einer aktiven Matrix nach Anspruch 1, dadurch gekennzeichnet, daß die opake Schicht (14, 16) leitend oder nichtleitend ist und die transparente Schicht (12, 16) auf die opake Schicht (14, 15) aufgebracht ist, die selbst auf die Platte (3) aufgebracht ist oder umgekehrt.

3. Bildschirm mit einer aktiven Matrix nach Anspruch 2, dadurch gekennzeichnet, daß die opake Schicht (14, 15) die nicht-gesteuerten Flächen des Schirms vollständig bedeckt.

4. Bildschirm mit einer aktiven Matrix nach Anspruch 2, dadurch gekennzeichnet, daß die opake Schicht wenigstens bestimmte Teile der nicht-gesteuerten Flächen des Schirmes bedeckt.

5. Bildschirm mit einer aktiven Matrix nach Anspruch 2, dadurch gekennzeichnet, daß die opake Schicht aus Segmenten besteht, die nur die nicht-gesteuerten Flächen vollständig bedecken, die zwischen den Steuerkomponenten liegen.

6. Bildschirm mit einer aktiven Matrix nach Anspruch 5, dadurch gekennzeichnet, daß die transparente Schicht (16) der Masseelektrode durch eine matrixartige Anordnung von Elektroden (Eᵢⱼ) gebildet ist, von denen jede vollständig oder teilweise die aktive Fläche jedes Pixels bedeckt und mit vier Lappen (82) versehen ist, die mit vier Elektroden an ihren vier Kanten verbunden ist.

7. Bildschirm mit einer aktiven Matrix nach Anspruch 6, dadurch gekennzeichnet, daß die Segmente (Sᵢⱼ, S'ᵢⱼ) der opaken Maske mit zwei seitlichen Lappen (81) versehen sind, die etwas über die aktive Fläche des Pixels hinausragen und die Lappen (82) der Elektroden (Eᵢⱼ) der transparenten Schicht der Masseelektrode überdecken.

8. Bildschirm mit einer aktiven Matrix nach einem der Ansprüche 1 bis 7, gekennzeichnet durch Bereiche (11), die aus einem opaken Material mit einer runden, sechseckigen, achteckigen oder anderen Form bestehen und derart auf die Gegenplatte (4) aufgebracht sind, daß ihre Flächen die Steuerkomponenten, nicht-gesteuerte Oberflächenteile des Schirms vollständig abdecken, um dessen Kontrast zu verbessern.

9. Bildschirm mit einer aktiven Matrix nach einem der Ansprüche 1 bis 8, dadurch gekennzeichnet, daß die Masseelektrode die Elektrode der Speicherkapazität bildet und an ihren Kanten durch einen Rahmen aus einem Material umgeben ist, das einen geringeren spezifischen Widerstand aufweist als der der Masseelektrode.

10. Bildschirm mit einer aktiven Matrix nach Anpruch 9, dadurch gekennzeichnet, daß der Rahmen durch eine Aufschichtung aus unterschiedlichen Materialien besteht, die einen geringeren spezifischen Widerstand als der der Masseelektrode aufweisen.

## Claims

1. Active-matrix display screen comprising a substrate plate (3), on one face of which are deposited electrodes (1) and thin-film components driving these electrodes (1), and a back plate (4) comprising one or more back electrodes (10) and covering the said face of the substrate plate (3), a liquid crystal being included between the electrodes (1) of the plate (3) and the back electrode(s) (10) of the back plate (4), the screen comprising an earth plane forming an equipotential over the entire area of the screen between the substrate plate (3) and the thin layers of the drive components, characterized in that the earth plane consists of two layers, one lying on top of the other, one of the layers being conductive and transparent and the other layer being opaque, at least the opaque layer being provided with apertures.

2. Active-matrix display screen according to Claim 1, characterized in that the opaque layer (14, 16) is conductive or non-conductive, the transparent layer (12, 16) being deposited on the opaque layer (14, 15) which is itself deposited on the plate (3), or vice versa.

3. Active-matrix display screen according to Claim 2, characterized in that the opaque layer (14, 15) entirely covers the non-driven areas of the screen.

4. Active-matrix display screen according to Claim 2, characterized in that the opaque layer covers at least certain parts of the non-driven areas of the screen.

5. Active-matrix display screen according to Claim 2, characterized in that the opaque layer consists of segments entirely covering only the non-driven areas lying between the drive components.

6. Active-matrix display screen according to Claim 5, characterized in that the transparent layer (16) of the earth plane consists of a matrix arrangement of electrodes (Eij), each of them covering, entirely or partly, the active area of each of the pixels and being provided with four tabs (82) connected to the four electrodes opposite its four intersecting edges.

7. Active-matrix display screen according to Claim 6, characterized in that the segments (Sij, S'ij) of the opaque mask are provided with two lateral tabs (81) extending slightly beyond the active area of the pixel and covering the tabs (82) of the electrodes (Eij) of the transparent layer of the earth plane.

8. Active-matrix display screen according to any one of Claims 1 to 7, characterized in that it comprises regions (11) which are made of an opaque material, of round, hexagonal, octagonal or any other shape, and are deposited on the back plate (4) so that their surfaces completely mask the drive components, parts of the non-driven area of the screen, so as to improve the contrast of the latter.

9. Active-matrix display screen according to any one of Claims 1 to 8, characterized in that the earth plane forming the electrode of the storage capacitor is surrounded on its edges by a ring of a material having a lower surface resistance than that of the earth plane.

10. Active-matrix display screen according to Claim 9, characterized in that the ring consists of a stack of different materials having a lower surface resistance than that of the earth plane.
